# EUROPÄISCHE PATENTANMELDUNG

(11) **EP 1 088 717 A2**
(43) Veröffentlichungstag der Anmeldung: **04.04.2001**
(21) Anmeldenummer: 00120435.3
(22) Anmeldetag: 19.09.2000
(51) Int. Cl.: B60S 1/04, B60S 1/08

(54) **Intelligente Wischablagenheizung**

(30) Priorität: 30.09.1999 DE 19946824
(71) Anmelder: DaimlerChrysler AG, 70567 Stuttgart (DE)
(72) Erfinder: Blessing, Alf, Dr., 73092 Heiningen (DE); Mäckel, Rainer, Dr., 53639 Königswinger (DE)
(74) Vertreter: Maute, Hans-Jürgen, Dipl.-Ing.

(57) **Zusammenfassung**

Bisherige Wischablagenheizungen werden nur von der Außentemperatur gesteuert. Sinkt die Außentemperatur unter den Gefrierpunkt, wird die Wischablagenheizung automatisch über einen bestimmten Zeitraum angeschaltet, egal ob die Wischergummis angefroren sind oder nicht. Dies erhöht den Kraftstoffverbrauch unnötig. Die Zuschaltung und der Betrieb der neuen Wischablagenheizung sollte nur dann erfolgen, wenn dies auch tatsächlich erforderlich ist.

Die Wischablagenheizung ist mit einem Sensor verbunden der bei tiefen Temperaturen direkt oder indirekt mißt, ob sich die Scheibenwischer beim Einschalten des Wischermotors bewegen lassen oder nicht, ohne dabei den Wischergummi oder den Motor zu beschädigen. In Abhängigkeit davon wird dann von einer intelligenten Ansteuerung die Wischablagenheizung zugeschaltet bzw. abgeschaltet.

Derartige Wischablagenheizungen werden vor allem in Kraftfahrzeugen benötigt.

## Beschreibung

**Die Erfindung betrifft** eine Wischablagenheizung zum Enteisen von festgefrorenen oder zugeschneiten Scheibenwischern gemäß dem Oberbegriff des Anspruchs 1.

Bei tiefen Temperaturen kann es vor allem beim Parken über Nacht an ungeschützten Stellen vorkommen, daß die Scheibenwischergummis an der Windschutzscheibe festfrieren. Schaltet der Fahrzeugführer nun den Scheibenwischer ein, um z.B. die Scheibe frei zu machen, kann entweder der Motor blockiert und beschädigt werden oder die Scheibenwischergummis können durch Losreißen Schaden nehmen.

Daher wird bei bisherigen Fahrzeugen das Gebiet der Windschutzscheibe, an der sich der bzw. die Scheibenwischer in Ruheposition befinden, mit einer Wischablagenheizung erwärmt. Durch die Erwärmung wird ein Ablösen des angefrorenen Wischers ermöglicht. Als Einschaltkriterium dient die Außentemperatur und die eingeschaltete Zündung. Unterschreitet die Außentemperatur einen bestimmten Grenzwert, so wird bei eingeschalteter Zündung die Wischablagenheizung zugeschaltet, unabhängig davon, ob der Wischer angefroren ist oder nicht. **Nachteilig** hierbei ist jedoch, daß die Heizung mehrere hundert Watt elektrische Leistung benötigt und sich dadurch der Kraftstoffverbrauch signifikant erhöht, weil die Heizung immer oder zumindest eine bestimmte Zeit lang eingeschaltet bleibt, egal ob dies vonnöten ist oder nicht.

Die DE 42 35 114 A1 offenbart ein Kraftfahrzeug mit Windschutzscheibe, bei dem die Scheibenwischer eines Kraftfahrzeugs im Windlauf, der sich an der Unterkante einer Windschutzscheibe befindet, angeordnet sind. Fahrzeuginnenseitig ist ein separater Luftführungskanal vorgesehen, der dem Ablagebereich der Scheibenwischer gezielt Warmluft zuführt, um vereiste oder mit Schnee zugesetzte Scheibenwischer freizulegen. Zur Verbesserung der Wärmeeinleitung in die Windschutzscheibe ist im Bereich der Warmluftaustrittsöffnung an der Innenseite der Windschutzscheibe ein verrippter Wärmeleitkörper angeordnet, der über eine Klebeschicht hoher Wärmeleitfähigkeit mit der Windschutzscheibe verbunden ist.

**Nachteilig** hierbei ist jedoch, daß die Enteisung der Scheibenwischer relativ lange Zeit beansprucht und die Heizung die Ablage beheizt, auch wenn die Scheibenwischer gar nicht an der Windschutzscheibe festgefroren oder mit Schnee bedeckt sind. Die Heizung wird automatisch mit der Lüftung im Fahrzeuginnern eingeschaltet.

Die **Aufgabe** der Erfindung ist bei einer Wischablagenheizung der eingangs genannten Art den Energieverbrauch, der benötigt wird, um eine einwandfreie Funktion der Scheibenwischer auch bei niedrigen Temperaturen zu gewährleisten, herabzusetzen und die Auftauzeiten zu beschleunigen.

Diese Aufgabe wird erfindungsgemäß durch die Merkmale im Kennzeichen des Patentanspruchs 1 **gelöst**. Hierbei wird die Wischablagenheizung mit einem Sensor verbunden, der mißt, ob sich die Scheibenwischer bei eingeschaltetem Scheibenwischermotor bewegen oder nicht. Diese Information wird dann in einer Auswerteeinheit ausgewertet. Mit dem Ergebnis wird dann wiederum die Wischablagenheizung an und ausgeschaltet, so daß die Wischablagenheizung nur dann eingeschaltet wird, wenn die Scheibenwischer tatsächlich festgefroren sind.

**Zweckmäßige Ausbildungen** ergeben sich dann in den abhängigen Ansprüchen. Hierbei wird als Sensor ein Drehzahlsensor am Wischermotor verwendet oder aber er wird als Strommesser ausgestaltet, der den Strom durch den Wischermotor mißt. Auch kann der Sensor als Bewegungssensor aufgebaut sein, der direkt die Bewegung an den Scheibenwischern mißt.

Die mit der Erfindung erzielten **Vorteile** sind die genaue Zuschaltmöglichkeit der Wischablagenheizung, die immer nur dann eingeschaltet wird, wenn sie tatsächlich benötigt wird, also nur dann, wenn die Scheibenwischer tatsächlich festgefroren sind und sich nicht mehr bewegen lassen. Desgleichen läßt sie sich auch exakt abschalten, nämlich genau dann, wenn der Abtauvorgang beendet ist.

Die Erfindung soll nachfolgend anhand von Ausführungsbeispielen und Figuren näher erläutert werden. Es zeigt:
- Figur 1: Schematischer Aufbau einer Wischablagenheizung mit Drehzahlsensor
- Figur 2: Schematischer Aufbau einer Wischablagenheizung mit Strommesser
- Figur 3: Schematischer Aufbau einer Wischablagenheizung mit Bewegungssensor
- Figur 4: Ablaufdiagramm zur Ansteuerung einer Wischablagenheizung

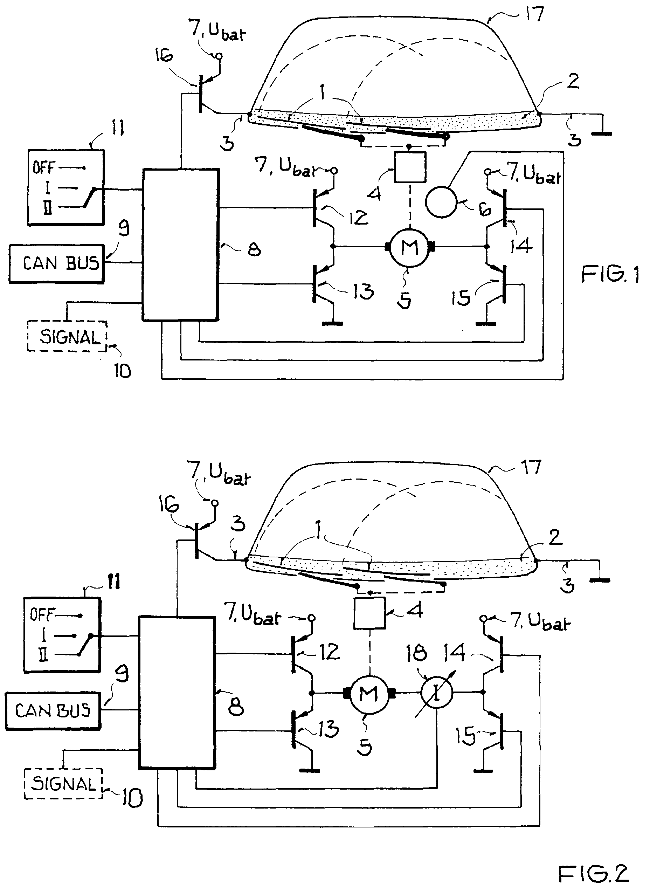

**Figur 1** zeigt eine Windschutzscheibe **17** mit den Scheibenwischern **1**. An der Windschutzscheibe **17** befindet sich die Wischablagenheizung **2**. Sie ist dort angebracht, wo sich die Ruhestellung der Scheibenwischer **1** im ausgeschalteten Zustand befindet. An dieser Stelle gefrieren in der Regel die Scheibenwischergummis, die sich am Scheibenwischer **1** auf der zur Windschutzscheibe **17** zugewandten Seite befinden, fest. Im Ausführungsbeispiel handelt es sich um eine elektrische Wischablagenheizung **2** mit der elektrischen Zuleitung **3**. Die Scheibenwischer **1** bzw. deren Gestänge werden über ein Getriebe **4** angetrieben, welches am Scheibenwischermotor **5** gekoppelt ist. Der Motor **5** wird über eine Vollbrücke bestehend aus vier Transistoren **12**, **13**, **14** und **15** versorgt. Hierbei handelt es sich beispielsweise um MOS-Transistoren Die Transistoren **12**, **13**, **14** und **15** werden von einer intelligenten Ansteuerung **8** mit integrierter Auswerteeinheit betrieben. Diese Auswerteeinheit dient dazu, erhaltene Meßwerte auszuwerten und dem Ergebnis der Auswertung ein Ereignis zuzuordnen. Die intelligente Ansteuerung **8** ist gleichfalls mit dem Drehzahlsensor **6** verbunden, der die Drehzahl am Scheibenwischermotor **5** oder am Getriebe **4** mißt. Dieser Meßwert wird in der intelligenten Ansteuerung **8** ausgewertet und weiterverarbeitet. Gleichfalls ist die intelligente Ansteuerung **8** mit dem Mehrstufenschalter **11**, der die Scheibenwischerfunktion steuert, verbunden, um die Schalterstellung für die Auswertung mit zu berücksichtigen. Über einen Anschluß an einen fahrzeuginternen Bus **9** oder eine andere Signalleitung **10** bekommt die intelligente Ansteuerung **8** weitere Informationen bezüglich der Außentemperatur und den Betriebszustand des Wagens, wie z.B. Zündung ist an oder aus. Nach dem Einschalten der Zündung bei Außentemperaturen unterhalb eines bestimmten Grenzwertes steuert die Ansteuerung **8** zunächst die Transistoren **12** und **15** mit einem pulsweitenmodulierten Signal an. Dadurch wird ein langsames Anfahren des Wischers mit begrenztem Drehmoment möglich, wenn die Batteriespannung **7** angelegt wird.

Kommt innerhalb einer Zeit T₀ kein Signal oder nicht ausreichende Signale von dem Drehzahlsensor **6**, so wird angenommen, daß der Scheibenwischer **1** festgefroren ist. Die Transistoren **12** und **15** werden abgeschaltet und die Wischablagenheizung **2** wird mit dem Transistor **16** eingeschaltet und an die Batteriespannungsversorgung **7** angeschlossen. Zur Entlastung des Gestänges, mit dem die Scheibenwischer über das Getriebe **4** hin und her bewegt werden, kann der Motor **5** durch die Transistoren **13** und **14** in Gegenrichtung zur ursprünglichen Ruheposition zurückbewegt werden.

Kommen innerhalb der Zeit T₀ ausreichend Signale vom Drehzahlsensor **6**, so muß davon ausgegangen werden, daß kein Festfrieren vorliegt. Die Transistoren **12** und **15** werden abgeschaltet und der Scheibenwischer **1** wird durch Einschalten der Transistoren **13** und **14** wieder in seine ursprüngliche Ruheposition gefahren. Die Wischablagenheizung **2** wird nicht eingeschaltet.

**Figur 2** zeigt eine Windschutzscheibe **17** mit den Scheibenwischern **1**. An der Windschutzscheibe **17** befindet sich die Wischablagenheizung **2**. Sie ist dort angebracht, wo sich die Ruhestellung der Scheibenwischer **1** im ausgeschalteten Zustand befindet. An dieser Stelle gefrieren in der Regel die Scheibenwischergummis, die sich am Scheibenwischer **1** auf der zur Windschutzscheibe **17** zugewandten Seite befinden, fest. Im Ausführungsbeispiel handelt es sich um eine elektrische Wischablagenheizung **2** mit der elektrischen Zuleitung **3**. Die Scheibenwischer **1** bzw. deren Gestänge werden über ein Getriebe **4** angetrieben, welches am Scheibenwischermotor **5** gekoppelt ist. Der Motor **5** wird über eine Vollbrücke bestehend aus vier Transistoren **12**, **13**, **14** und **15** versorgt. Die Transistoren **12**, **13**, **14** und **15** werden von einer intelligenten Ansteuerung **8** mit integrierter Auswerteeinheit betrieben. Diese Auswerteeinheit dient dazu, erhaltene Meßwerte auszuwerten und dem Ergebnis der Auswertung ein Ereignis zuzuordnen. Die intelligente Ansteuerung **8** ist gleichfalls mit dem Strommesser **18** verbunden, der den Strom durch den Scheibenwischermotor **5** mißt. Übersteigt der Strom für eine Zeit t> T₀ den maximalen Einschaltstrom, so ist davon auszugehen, daß der Motor **5** blockiert ist. Ist außerdem die Außentemperatur ausreichend niedrig, so wird die Wischablagenheizung **2** eingeschaltet.

Dies geschieht, indem der gemessene Stromwert durch den Motor **5** in der intelligenten Ansteuerung **8** ausgewertet und weiterverarbeitet wird. Gleichfalls ist die intelligente Ansteuerung **8** mit dem Mehrstufenschalter **11**, der die Scheibenwischerfunktion steuert, verbunden, um die Schalterstellung für die Auswertung mit zu berücksichtigen. Über einen Anschluß an einen fahrzeuginternen Bus **9** oder eine andere Signalleitung **10** bekommt die intelligente Ansteuerung **8** weitere Informationen bezüglich der Außentemperatur und den Betriebszustand des Wagens, wie z.B. Zündung ist an oder aus. Nach dem Einschalten der Zündung bei Außentemperaturen unterhalb eines bestimmten Grenzwertes steuert die Ansteuerung **8** zunächst die Transistoren **12** und **15** mit an. Dadurch wird ein langsames Anfahren des Wischers mit begrenztem Drehmoment möglich, wenn die Batteriespannung **7** angelegt wird. Jedoch ist das langsame Anfahren des Scheibenwischers **1** nicht unbedingt nötig, so daß auch ein Schalter ausreichend wäre, der den Motor **5** abschaltet, wenn der Strom für eine Zeit t> T₀ den maximal zulässigen Einschaltstrom überschreitet. Wichtig hierfür ist nur, daß die Kräfte, die auf Motor, Getriebe bzw. Scheibenwischergummis wirken, begrenzt werden

Übersteigt der gemessene Stromwert für eine Zeit t> T₀ den maximalen Einschaltstrom, so wird angenommen, daß der Scheibenwischer **1** festgefroren ist. Die Transistoren **12** und **15** werden abgeschaltet und die Wischabtagenheizung **2** wird mit dem Transistor **16** eingeschaltet und an die Batteriespannungsversorgung **7** angeschlossen. Zur Entlastung des Gestänges, mit dem die Scheibenwischer über das Getriebe hin und her bewegt werden, kann der Motor **5** durch die Transistoren **13** und **14** in Gegenrichtung zur ursprünglichen Ruheposition zurückbewegt werden.

Übersteigt dagegen der gemessene Stromwert den maximalen Stromwert nicht, so muß davon ausgegangen werden, daß kein Festfrieren vorliegt. Die Transistoren **12** und **15** werden abgeschaltet und der Scheibenwischer **1** wird durch Einschalten der Transistoren **13** und **14** wieder in seine ursprüngliche Ruheposition gefahren. Die Wischablagenheizung **2** wird nicht eingeschaltet. Die Scheibenwischerfunktionen sind durch Betätigen des Mehrstufenschalters **11** gefahrtos abrufbar.

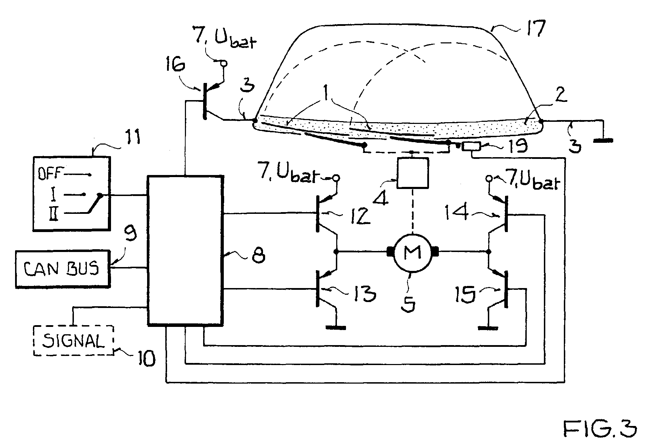

**Figur 3** zeigt eine Windschutzscheibe **17** mit den Scheibenwischern **1**. An der Windschutzscheibe **17** befindet sich die Wischablagenheizung **2**. Sie ist dort angebracht, wo sich die Ruhestellung der Scheibenwischer **1** im ausgeschalteten Zustand befindet. An dieser Stelle gefrieren in der Regel die Scheibenwischergummis, die sich am Scheibenwischer **1** auf der zur Windschutzscheibe **17** zugewandten Seite befinden, fest. Im Ausführungsbeispiel handelt es sich um eine elektrische Wischablagenheizung **2** mit der elektrischen Zuleitung **3**. Die Scheibenwischer **1** werden über ein Getriebe **4** angetrieben, welches am Scheibenwischermotor **5** gekoppelt ist. Der Motor **5** wird über eine Vollbrücke bestehend aus vier Transistoren **12**, **13**, **14** und **15** versorgt. Die Transistoren **12**, **13**, **14** und **15** werden von einer intelligenten Ansteuerung **8** mit integrierter Auswerteeinheit betrieben. Diese Auswerteeinheit dient dazu, erhaltene Meßwerte auszuwerten und dem Ergebnis der Auswertung ein Ereignis zuzuordnen. Die intelligente Ansteuerung **8** ist gleichfalls mit dem Bewegungssensor **19** verbunden. Dieser kann in der einfachsten Ausführungsform als Lichtschranke ausgebildet sein. Der Bewegungssensor **19** mißt direkt, ob sich die Scheibenwischer **1** innerhalb einer vorgegebenen Zeit T₀ bewegen oder wie schnell sie sich bewegen. Dieses Ergebnis wird in der intelligenten Ansteuerung **8** ausgewertet und weiterverarbeitet. Gleichfalls ist die intelligente Ansteuerung **8** mit dem Mehrstufenschalter **11**, der die Scheibenwischerfunktion steuert, verbunden, um die Schalterstellung für die Auswertung mit zu berücksichtigen. Über einen Anschluß an einen fahrzeuginternen Bus **9** oder eine andere Signalleitung **10** bekommt die intelligente Ansteuerung **8** weitere Informationen bezüglich der Außentemperatur und den Betriebszustand des Wagens, wie z.B. Zündung ist an oder aus. Nach dem Einschalten der Zündung bei Außentemperaturen unterhalb eines bestimmten Grenzwertes steuert die Ansteuerung **8** zunächst die Transistoren **12** und **15** an. Die Batteriespannung **7** wird angelegt und über eine definierte Zeit T₀ wird beobachtet, ob sich die Scheibenwischer **1** bewegen oder nicht. Wird keine oder nur eine unzureichende Bewegung der Scheibenwischer **1** detektiert, so wird der Motor wieder abgeschaltet. Es wird jetzt angenommen, daß die Scheibenwischer **1** festgefroren sind. Die Wischablagenheizung **2** wird mit dem Transistor **16** eingeschaltet und an die Batteriespannungsversorgung **7** angeschlossen. Zur Entlastung des Gestänges, mit dem die Scheibenwischer über das Getriebe (4) bewegt werden und der bzw. des Scheibenwischer/s **1** selbst, kann der Motor **5** durch die Transistoren **13** und **14** in Gegenrichtung zur ursprünglichen Ruheposition zurückbewegt werden.

Wird vom Bewegungssensor eine signifikante Bewegung erkannt, so muß davon ausgegangen werden, daß kein Festfrieren vorliegt. Die Transistoren **12** und **15** werden abgeschaltet und der Scheibenwischer **1** wird durch Einschalten der Transistoren **13** und **14** wieder in seine ursprüngliche Ruheposition gefahren. Die Wischablagenheizung **2** wird nicht eingeschaltet. Um eine Begrenzung der Kräfte beim Einschalten des Wischermotors zu erhalten, kann auch ein Zeitfaktor hinzugefügt werden. Erkennt der Bewegungssensor innerhalb eines bestimmten Zeitraumes nach dem Einschalten des Wischermotors keine Bewegung, so wird der Motor rechtzeitig abgeschaltet, bevor eine Schädigung des Motors oder der Wischergummis eintritt.

In den Ausführungsbeispielen wird demnach die Wischablagenheizung **2** nur dann zugeschaltet, wenn der oder die Scheibenwischer **1** auch wirklich festgefroren ist/sind. Des weiteren wird die Wischablagenheizung automatisch abgeschaltet, wenn sich die Scheibenwischer **1** wieder frei bewegen können.

Der Test ob ein Festfrieren vorliegt, kann entweder beim Einschalten der Zündung, beim Öffnen der Zentralverriegelung oder regelmäßig während der Fahrt durchgeführt werden. Weiterhin kann dieser Test bei jedem Einschalten der Wischer **1** ausgeführt werden und somit eine Beschädigung der Wischer verhindert werden. Auch erweist es sich von Vorteil, wenn dieser Test abhängig von der Außentemperatur gemacht wird. Sollte dann ein Fehler erkannt werden, so kann dies dem Fahrer zurückgemeldet werden.

Zweckmäßig für alle Anwendungsbeispiele ist es, die Wischablagenheizung **2** abzuschalten, wenn der/die Scheibenwischer wieder frei beweglich ist/sind. Hierbei ist aus Sicherheitsgründen eine Verzögerungszeit zwischen Erkennung der wiederhergestellten Bewegungsmöglichkeit des Scheibenwischers **1** und dem Abschalten der Wischablagenheizung **2** vorzusehen.

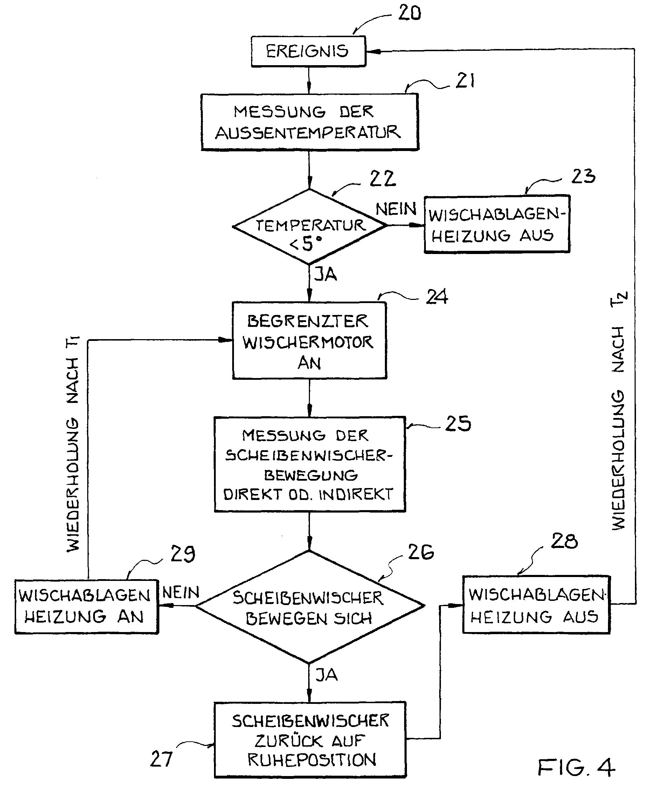

Zur Verdeutlichung zeigt **Figur 4** ein Ablaufdiagramm zur intelligenten Ansteuerung der Wischablagenheizung. Um die intelligente Ansteuerung überhaupt zu aktivieren, steht an erster Stelle **20** ein Ereignis. Dieses Ereignis kann das Aufschließen des Fahrzeugs, das Öffnen der Fahrertür oder das Einschalten der Zündung sein. Jedoch kann der weitere Ablauf auch in regelmäßigen Abständen während der Fahrt initialisiert werden. Unmittelbar nach dem eingetroffenen Ereignis erfolgt die Messung der Außentemperatur **21**. Danach wird der Temperaturmeßwert mit einem Sollwert **22** verglichen. Liegt die Temperatur über dem Gefrierpunkt so bleibt die Wischablagenheizung aus **23**. Liegt die Temperatur unter dem Sollwert z.B. 5°C, so wird der Scheibenwischermotor eingeschaltet **24**. Nach dem Einschalten des Wischermotors erfolgen die direkten (z.B. mittels Bewegungssensor) oder indirekten (z.B. mittels Drehzahlsensor oder Strommessung) Messungen bezüglich der Beweglichkeit des Scheibenwischers **25**. Bei der Auswertung der Meßergebnisse wird festgestellt, ob sich die Scheibenwischer bewegen oder nicht **26**. Bewegen sich die Scheibenwischer, so werden nach der Erkennung der Bewegung der Scheibenwischer **26** die Scheibenwischer wieder zurück auf ihre Ruheposition **27** gebracht, um das Gestänge zu entlasten. Dann wird bzw. bleibt die Wischablagenheizung ausgeschaltet **28**. Nach einer definierten Zeit T₂ erfolgt wieder die Messung der Außentemperatur **21** und der gesamte Vorgang Schritt **20** bis Schritt **27** wird wiederholt. Bewegen sich die Scheibenwischer nicht, so wird die Wischablagenheizung eingeschaltet **29**. Diese bleibt über eine definierte Zeit T₁ an. Danach wird erneut überprüft, ob die Scheibenwischer enteist sind oder nicht. Dazu wird erneut der Wischermotor im begrenzten Betriebsmodus, das heißt der Wischermodus wird dabei nicht überlastet oder die Scheibenwischergummis abgerissen, angeschaltet und Schritt **24** bis **26** wird wiederholt.

Derartige Wischablagenheizungen finden nicht nur Verwendung im Kraftfahrzeug, sondern sind auch sinnvoll im Bereich der Schiff- und Luftfahrt.

## Patentansprüche

1. Wischablagenheizung (2) zum Enteisen von festgefrorenen oder zugeschneiten Scheibenwischern (1), wobei die Scheibenwischer (1) von einem Wischermotor (5) angetrieben werden, **dadurch gekennzeichnet, daß** die Wischablagenheizung (2)
- mit einem Sensor, der mißt, ob sich ein oder mehrere Scheibenwischer (1) bei eingeschaltetem Wischermotor (5) bewegen und
- mit einer intelligenten Ansteuerung (8), die in Abhängigkeit vom Meßwert des Sensors die Wischablagenheizung (2) an- und ausschaltet,
verbunden ist.

2. Wischablagenheizung (2) nach Anspruch 1, **dadurch gekennzeichnet, daß** die Wischablagenheizung (2) nur dann eingeschaltet wird, wenn die Scheibenwischer (1) festgefroren sind.

3. Wischablagenheizung (2) nach Anspruch 1, **dadurch gekennzeichnet, daß** die Wischablagenheizung (2) nur dann abgeschaltet wird, wenn die Scheibenwischer (1) wieder frei beweglich sind.

4. Wischablagenheizung (2) nach Anspruch 1, **dadurch gekennzeichnet, daß** der Sensor ein Drehzahlsensor (6) am Wischermotor (5) ist.

5. Wischablagenheizung (2) nach Anspruch 1, **dadurch gekennzeichnet, daß** der Sensor ein Drehzahlsensor (6) am Getriebe (4) ist.

6. Wischablagenheizung (2) nach Anspruch 1, **dadurch gekennzeichnet, daß** der Sensor ein Strommesser (18) ist, der den Strom durch den Wischermotor (5) mißt.

7. Wischablagenheizung (2) nach Anspruch 1, **dadurch gekennzeichnet, daß** der Sensor ein Bewegungssensor (19) ist, der die Bewegung der Scheibenwischer (1) sensiert.
